# EUROPEAN PATENT SPECIFICATION

(11) **EP 0 543 353 B1**
(45) Date of publication and mention of the grant of the patent: **06.03.1996**
(21) Application number: 92119645.7
(22) Date of filing: 17.11.1992
(51) Int. Cl.: B23P 15/00, F01L 3/02, B22F 3/12

(54) **Method for producing an inlet or exhaust valve for internal combustion engine**
Verfahren zur Herstellung eines Einlass- oder Auslassventiles für eine Brennkraftmaschine
Procédé de fabrication d'une soupape d'admission ou d'échappement pour un moteur à combustion interne

(30) Priority: 18.11.1991 JP 330084/91
(43) Date of publication of application: 26.05.1993
(73) Proprietor: SUMITOMO LIGHT METAL INDUSTRIES, LTD., Tokyo 105 (JP)
(72) Inventor: Shibue, Kazuhisa, Nagoya City, Aichi (JP); Minoda, Tadashi, Nagoya City Aichi (JP); Mizukoshi, Hideo, Nagoya City Aichi (JP); Sasaki, Naoe, Nagoya City, Aichi (JP)
(74) Representative: Müller-Wolff, Thomas

(56) References cited:
- EP-A- 0 495 454
- US-A- 3 073 294
- PATENT ABSTRACTS OF JAPAN vol. 16, no. 194 (C-0938)11 May 1992 & JP-A-40 28 832 (SUMITOMO) 31 January 1992
- PATENT ABSTRACTS OF JAPAN vol. 015, no. 243 (C-0842)21 June 1991 & JP-A-30 75 385 (SUMITOMO) 29 March 1991
- PATENT ABSTRACTS OF JAPAN vol. 009, no. 264 (M-423)22 October 1985 & JP-A-60 111 006 (KAWASAKI) 17 June 1985
- PATENT ABSTRACTS OF JAPAN vol. 013, no. 056 (C-566)8 February 1989 & JP-A-63 247 321 (SUMITOMO) 14 October 1988
- PATENT ABSTRACTS OF JAPAN vol. 016, no. 110 (C-0920)18 March 1992 & JP-A-32 85 051 (SUMITOMO) 16 December 1991

## Description

This invention relates to a method for the production of an inlet or exhaust valve for an internal combustion engine thereof. Particularly, the present invention relates to a method for the production of an inlet or exhaust valve having excellent abrasion and heat resistance for an internal combustion engine;
more particulary this invention relates to a method for the production of an inlet or exhaust valve consisting of titanium aluminide (TiAl) as the base material for an internal combustion engine.

Recent demands for weight reduction of automobiles call for weight reduction, as well as performance improvement, of the components of internal combustion engines. Particulary in the case of engine valves, weight reduction reduces the inertia mass, which then increases the engine speed of the internal combustion engine. Thus, weight reduction of engine valves greatly improves the automobile performance.

Since engine valves operate under high stress conditions while being exposed to high temperatures and oxidizing corrosive atmosphere at levels of 200 - 450°C during the intake stage and 600 - 800°C during the exhaust stage, their materials are required to have sufficient mechanical strength and heat resistance. Consequently, engine valves are conventionally made of metallic materials such as steel or Ni alloy. These materials, however, do not satisfy weight reduction requirements. Regarding lighter valve materials only Ti alloys are in practical use in part for the inlet valves operating at lower temperature ranges.

Titanium aluminide (a Ti-Al group intermetallic compound) is a light material having excellent high temperature strength. The high temperature strength of TiAl at the exhaust valve operating level, around 800°C, is almost the same as that of SUH 35, a valve steel, while the density of TiAl is approximately one half of SUH 35. This aluminide advantage makes Ti-Al promising candidate for use as a component of internal combustion engines. Nevertheless, the hardness of TiAl is around 230 Hv, which suggests that TiAl is not an ideal valve material in terms of durability.

To improve durability, a common practice is to give various surface treatments to core parts of exhaust valves made of steel. According to JP 3075385 the surface of machine sliding parts made of TiAl-base alloy can be coated with TiN. A method of producing titanium aluminide by the steps of
1. mixing Ti-powder and Al-powder to prepare a mixture of 40 - 55 at % of Al and the balance Ti,
2. subjecting the mixture to a CIP (cold isostatic pressing) process to form a Ti-Al shaped mixture,
3. degassing the shaped mixture and sealing it into an Al-can,
4. extruding it and cutting it to a predetermined shape and
5. heating the mixture in an inert atmosphere at 300 °C or higher to react oxygen with Al by diffusing Al into the Ti structure and to form an Al₂O₃ phase and to disperse said Al₂O₃ phase, followed by a HIP (hot isostatic pressing) process to synthesize titanium aluminide is known from EP-A-0 495 454
This document is cited under Article 54(3) EPC. From this document it is known that a composition as mentioned above can be heated in an HIP unit at a temperature of 500 to 1460 °C and 152 GPa of pressure for a retention time ranging from 0,5 to 100 hours. This known process is suitable to produce heat resistant components in the fields of automobile such as internal combustion engine inlet and exhaust valves, aircraft, space and industrial equipment manufacture.

Unfortunately, however, the procedure for surface treatment for TiAl has not always been effective, and thus application of TiAl to engine valves has not yet been introduced on a commercial scale.

It is an object of the invention to provide a method which encludes separate metallic ingots or alloy powders as starting material and which enables a fully integrated production line for the production of an inlet or exhaust valve, which comprises titanium aluminide as the base material and which is subjected to optimum surface treatment on specific portions of the valve to provide heat resistance and durability which fully satisfy the requirements of the valve for use in internal combustion engines.

To achieve this object, a method for the production of an inlet or exhaust valve for internal combustion engines of this invention was developed based on a diversified studies on surface treatment to satisfy the requirements for various parts of the valve comprising titanium aluminide as the base material. The inlet or exhaust valve consists of a columnar shaft and a conical face connected thereto. The shaft and face are made of titanium aluminide. The shaft is coated with by TiN, the face is coated by Ni alloy, and the shaft end is covered with a steel cap.

The inlet or exhaust valve produced by the method of this invention is made of titanium aluminide as the base material which is light and is superior in resistant to high temperature strength, and each part of the valve is applied with an adequate surface treatment. The valve therefore has high resistance to heat, abrasion, and corrosion. As a result, the valve is extremely durable in its totality.

The invention relates to a method for the production of an internal combustion engine inlet or exhaust valve comprising
a. mixing Ti powder of 150 µm or less particle size with Al or AlMn and/or AlCr powder of 150 µm or less particle size to form a composition of (in mass %) : Al= 32 - 35 % remainder Ti and unavoidable impurities or Al = 32 - 35 % and Mn and/or Cr = 2 - 3 %,
b. forming said mixture into a compressed powder body by a CIP ( cold isostatic pressing) process,
c. sealing said compressed powder body into an Al-can and degassing it,
d. processing the body in a hot press to prepare a billet of 100 % filling factor (ratio of actual density to theoretical density),
e. extruding said billet and cutting it to a designated form,
f. forging it into a preform of a shape of an inlet or exhaust valve
g. processing said preform by a HIP (hot isostatic pressing) process to conduct reactive sintering,
h. machining said preform to obtain a base body having the valve shape,
i. forming a concave into the conical face of said base body,
j. flame coating of Ni-alloy on the concave
k. machining the excess build up into a smooth surface to form a Ni-alloy coating layer,
l. fixing a steel cap onto the shaft end,
m. coating TiN on the surface of said shaft by ion plating.

Preferably, said compressed powder body has a filling factor (actual density / theoretical density) of 75 - 85 %, wherein said degassing is conducted under a temperature of 350 to 450° C for a period of 20 - 30 h and wherein said hot pressing takes place at a temperature of 350 to 450 °C.

Preferably, the HIP process (hot isostatic pressing) is conducted under a temperature between 1200 - 1400 °C, a pressure of 150 - 170 MPa and a holding time of 4 to 6 hours, wherein the TiN-layer has a thickness of 1 - 3 µm.

An alternative method for the production of an internal combustion engine inlet or exhaust valve uses a non-powder-metallurgical process wherein a Ti ingot, an Al-ingot, and a AlMn intermediate alloy are compounded to form a composition of (in mass %) : Al = 30 - 35 % remainder Ti and unavoidable impurities or Al = 30 - 35 % or Mn = 1,5 - 4% remainder Ti and unavoidable impurities
- said composition is melted and casted to form a billet,
- extruding said billet and machining it to form a TiAl valve base body,
- forming a concave into the conical face of said base body,
- flame coating of Ni alloy on the concave,
- machining the excess build up into a smooth surface,
- fixing the steel cap onto the shaft end of the valve,
- coating TiN on the surface of said shaft by ion plating.

### Brief Description of the Drawings

- Fig. 1: shows the oblique view of the inlet or exhaust avlve of this invention.
- Fig. 2: is a cross sectional view of th inlet or exhaust valve of this invention showing the state after the primary processing stage of the manufacturing process.
- Fig. 3: is a cross sectional view of the inlet or exhaust valve of this invention showing the state after the Ni alloy flame coating stage of the manufacturing process.
- Fig. 4: is a cross sectional view of the inlet or exhaust valve of this invention showing the state after the secondary processing state of the manufacturing process.
- Fig. 5: is a cross sectional view of the inlet or exhaust value of this invention showing the state after the cap fixing stage of the manufacturing stage.
- Fig. 6: is a cross sectional view of the inlet or exhaust valve of this invention showing the completed stage after the TiN coating stage of the manufacturing process.

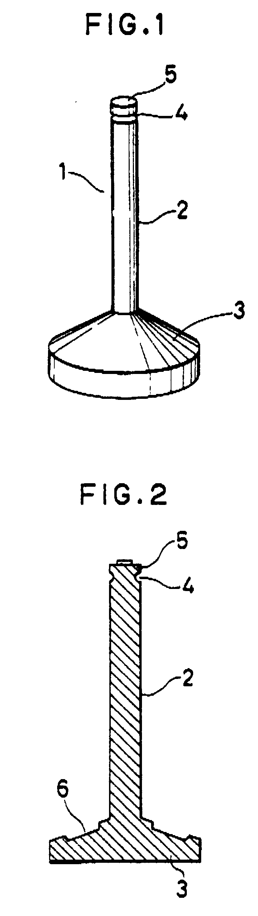

As shown in Fig. 1, the inlet or exhaust valve 1 of this invention is a monolithic structure integrating the columnar shaft 2 having a groove 4 and shaft end 5 and on the opposite end a conical face 3. The valve base body is made of titanium aluminide which is preferably formed by reactive sintering. Each part of the shaft is subjected to surface treatment to form a structural features, which include TiN coating on the shaft 2, Ni alloy coating on the face 3, and a steel cap on the shaft end 5.

The inlet or exhaust valve of internal combustion engines having the above described structure is produced by the procedure described below.

A predetermined amount of Ti ingot and Al ingot is mixed and melted in an arc-melting furnace to prepare a cast ingot. The ingot is subjected to plastic working such as high temperature forging or extrusion. The extruded or forged shape is machined to form the valve-shaped titanium aluminide base body.

An alternative method to produce the base body is also applicable, described as follows: Predetermined amounts of Ti powder and Al, or Al alloy powder such as Al-Mn alloy or Al-Cr alloy, are mixed to the designed composition of Ti-Al. A compressed powder body is then produced from the mixture by the CIP treatment (cold isostatic pressing). The compressed powder body is sealed in an Al can for degassing. Using a hot press, a billet is formed. Plastic deformation such as extrusion is then applied to form the forging stock. The stock is forged to form a shape having near the valve form. The form is then processed by the HIP method (hot isostatic pressing) in a non-oxidizing atmosphere at high temperature and high pressure to convert the form into titanium aluminide through the reactive sintering. The processed form is finally machined to obtain the valve-shaped base body.

The titanium aluminide base body formed into the valve shape is subjected to surface treatment and processing the steps shown in Fig. 2 through 6.

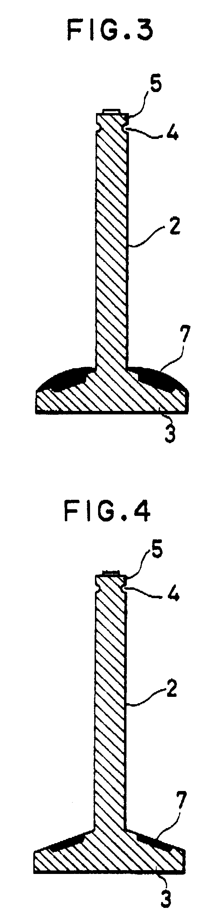

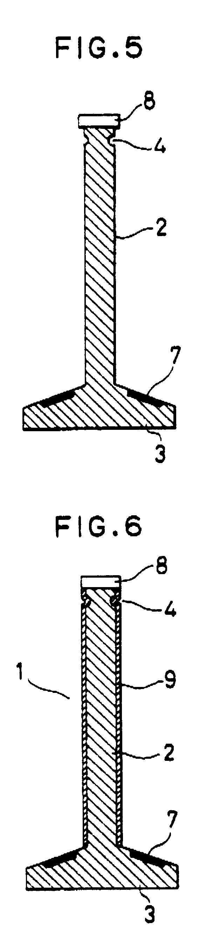

First, as illustrated in Fig. 2, the face 3 of the base material is processed to form a concave 6 as the primary processing step. The surface of the concave 6 is flame coated with Ni alloy to give a corrosion and abrasion resistant coating at a high temperature [Fig. 3]. The excess amount of Ni alloy flame coated on the face 3 is machined to form a smooth surface as the secondary processing step [Fig. 4]. The steel cap 8 is joined to the shaft end 5 by press fitting or soldering [Fig. 5]. The steel cap 8 may be treated by carburizing, nitriding, or quench hardening to give abrasion resistance in advance, as necessary. The shaft 2 is then coated with TiN by an ion plating process or other adequate method to form a TiN layer 9 on the shaft surface tp prevent the shaft from seizing on the valve guide. The inlet or exhaust valve is thus produced by this procedure [Fig. 6].

The order of these processing steps of surface treatment is not fixed and may be changed for specific cases.

The invention is further described in more detail using comparative examples.

### Example 1

Ti powder (150 m or less of particle size) and Al-Mn alloy powder (150 m or less of particle size) were mixed to form a composition of Ti- 33.5%, Al-2.5% Mn (mass %; the same unit is used hereafter). The mixture was formed into a compressed powder body having 80% of filling factor (measured by weight to volume) using the CIP process (cold isostatic pressing). The compressed powder body was sealed into an Al can for degassing at 400°C for 24 hrs. The body was processed in a hot press at 400°C to prepare a billet of 100 % filling factor (The filling factor was measured by the actual density of the billet divided by the value for the theoretical density of the body) for extrusion.

The billet was extruded at 400°C, followed by cutting to a designated form, which was forged into a shape near to that shown in Fig. 1. The obtained forged material was processed by HIP (hot isostatic pressing) to conduct reactive sintering to form the valve base material for a valve consisting of TiAl intermetallic compound.

The employed HIP (hot isostatic pressing) conditions were 1300°C, 160MPa, and 5hrs. The base material was then machined to obtain a base body having the valve shape.

The concave 6 was formed on the face 3 of the base body consisting of above described titanium aluminide. After flame coating of Ni alloy 7 on the concave 6, the excess build up was machined into smooth surface to form a Ni alloy coating layer [Fig. 2-4]. The carburized martensite steel cap 8 was then press fitted onto the shaft end 5 [Fig. 5]. As the next step, TiN was coated on the surface of shaft 2 by an ion plating method to form a TiN layer having 2 m of thickness [Fig. 6].

The inlet or exhaust valve for internal combustion engines produced by the above procedure was measured for hardness. The hardness at the Ni alloy coated part was Rc=50 or larger, the hardness at the steel cap end face was Hv=600 or larger, and the TiN layer was Hv=1000 or larger.

### Example 2

Ti ingot, Al ingot, and Al-Mn intermediate alloy were compounded to form a composition of Ti-33,5%, Al-2,5%, Mn to be melted in an arc melting furnace, followed by casting to form a billet for extrusion. The billet was extruded at 1200°C to be machined to form a TiAl valve base body. The base body was subjected to same surface treatment and processing as in Example 1 to produce the inlet or exhaust valve for internal combustion engines. The produced valve was measured for hardness. The hardness at the Ni alloy coated part was Rc=50 or larger, the TiN layer was Hv=1000 or larger, and the hardness at the steel cap end face was Hv=600 or larger.

### Example 3

Ti ingot and Al ingot were compounded to form a composition of Ti-34%Al to be melted in an arc melting furnace, followed by casting to form a billet for extrusion.

The billet was extruded at 1200°C to be machined to form a TiAl valve base body. The base body was subjected to the same surface treatment and processing as in Example 1 to produce the inlet or exhaust valve for internal combustion engines. The produced valve was measured for hardness. The hardness at the Ni alloy coated part was Rc=50 or larger, and the hardness at the steel cap end face was Hv=600 or larger, and the TiN layer was Hv=1000 or larger.

### Example 4

The face 3 of the valve base body comprising the same TiAl intermetallic compound as in Example 1 was machined to form the concave 6 on the surface. The concave 6 was flame coated with Ni alloy, and the excess build up was removed by machining. The smoothened surface of the face was coated with Ni alloy [Fig. 2-4]. The coating layer gave a hardness of Rc=50 or larger.

The shaft end 5 was soldered and joined together with a carburized martensite steel cap 8 [Fig. 5]. Soldering was carried out at 900°C in a vacuum for 10 min. using a solder consisting of Ti-Zr-Cu-Ni alloy. The cap end face showed a hardness of Hv=600 or larger.

The shaft 2 was then coated with TiN layer 9 by an ion plating method [Fig. 6]. The formed TiN Layer had 2 µm of thickness and had a hardness of Hv=1000 or larger.

### Example 5

The inlet or exhaust valves produced in Examples 1 through 4 were mounted on a gasoline engine of a passenger car and were tested for engine performance under conditions of 3000 rpm for 50 hrs. After the test, all valves were inspected for the occurrence of abrasion. All valves had no weight loss and maintained their pre-test dimensions.

### Comparative examples 1 and 2

Valve base bodies were prepared using the same procedure as employed in Examples 1 and 3. These base bodies were machined to form inlet or exhaust valves for internal combustion engines without applying any surface treatment. These valves were mounted on a gasoline engine of a passenger car and were tested for engine performance under the same conditions as in Example 5.

After the test, all valves were inspected. Each valve tested showed 150 mg of weight loss at the shaft end and many score marks on the face with considerable abrasion were found on all valves.

As described above, this invention allows titanium aluminide to be produced as the component material of an inlet or exhaust valve for internal combustion engines by applying adequate surface treatment to the shaft, face, and shaft end to give durability. Thus, this invention provides a method to produce engine valves which satisfy the requirements of performance improvement and weight reduction of vehicles on a commercial scale.

## Claims

1. A method for the production of an internal combustion engine inlet or exhaust valve comprising
a. mixing Ti powder of 150 µm or less particle size with Al or AlMn and/or AlCr powder of 150 µm or less particle size to form a composition of (in mass %) : Al= 32 - 35 % remainder Ti and unavoidable impurities or Al = 32 - 35 % and Mn and/or Cr = 2 - 3 %,
b. forming said mixture into a compressed powder body by a CIP ( cold isostatic pressing) process,
c. sealing said compressed powder body into an Al-can and degassing it,
d. processing the body in a hot press to prepare a billet of 100 % filling factor (ratio of actual density to theoretical density),
e. extruding said billet and cutting it to a designated form,
f. forging it into a preform of a shape of an inlet or exhaust valve
g. processing said preform by a HIP (hot isostatic pressing) process to conduct reactive sintering,
h. machining said preform to obtain a base body having the valve shape,
i. forming a concave into the conical face of said base body,
j. flame coating of Ni-alloy on the concave
k. machining the excess build up into a smooth surface to form a Ni-alloy coating layer,
l. fixing a steel cap onto the shaft end,
m. coating TiN on the surface of said shaft by ion plating.

2. A method for the production of an internal combustion engine inlet or exhaust valve according to claim 1, wherein said compressed powder body has a filling factor (actual density / theoretical density) of 75 - 85 %.

3. A method for the production of an internal combustion engine inlet or exhaust valve according to claim 1 or 2, wherein said degassing is conducted under a temperature of 350 to 450° C for a period of 20 - 30 h.

4. A method for the production of an internal combustion engine inlet or exhaust valve according to one of the preceeding claims, wherein said hot pressing takes place at a temperature of 350 to 450 °C.

5. A method for the production of an internal combustion engine inlet or exhaust valve according to one of the preceeding claims, wherein the HIP (hot isostatic pressing) process is conducted under a temperature between 1200 - 1400 °C, a pressure of 150 - 170 MPa and a holding time of 4 to 6 hours.

6. A method for the production of an internal combustion engine inlet or exhaust valve according to one of the preceeding claims, wherein the TiN-layer has a thickness of 1 - 3 µm.

7. A method for the production of an internal combustion engine inlet or exhaust valve, wherein a Ti ingot and an Al-ingot or an Ti ingot and an Al ingot and an AlMn intermediate alloy, respectively, are compounded to form a composition of (in mass %) : Al = 30 - 35 % remainder Ti and unavoidable impurities or Al = 30 - 35 % or Mn = 1,5 - 4% remainder Ti and unavoidable impurities, respectively,
- said composition is melted and casted to form a billet,
- extruding said billet and machining it to form a TiAl valve base body,
- forming a concave into the conical face of said base body,
- flame coating of Ni alloy on the concave,
- machining the excess build up into a smooth surface,
- fixing the steel cap onto the shaft end of the valve,
- coating TiN on the surface of said shaft by ion plating.

8. A method for the production of an internal combustion engine inlet or exhaust valve according to claim 7, wherein the extrusion takes place at a temperature between 1100 - 1300 °C.

9. A method for the production of an internal combustion engine inlet or exhaust valve according to one of the preceeding claims, wherein the steel cap is fixed by soldering.

10. A method for the production of an internal combustion engine inlet or exhaust valve according to claim 9, wherein the soldering is conducted at a temperature of 850 - 950 °C under vaccum for a period of 5 - 15 min.

11. A method for the production of an internal combustion engine inlet or exhaust valve according to claim 9 or 10, wherein a solder is used consisting of a Ti-Zr-Cu-Ni alloy.

## Patentansprüche

1. Verfahren zur Herstellung eines Einlaß- oder Auslaßventils für einen Verbrennungsmotor, durch
a. Vermischen von Ti-Pulver mit einer Partikelgröße von 150 µm oder weniger mit Al- oder AlMn- und/oder AlCr-Pulver mit einer Partikelgröße von 150 µm oder weniger, um eine Zusammensetzung (in Masse-%) von : Al = 32 - 35 %, Rest Ti und unvermeidliche Verunreinigungen oder Al = 32 - 35 % und Mn und/oder Cr = 2 - 3 % zu bilden,
b. Formen der genannten Mischung zu einem Preßling durch ein isostatisches Kaltpress-Verfahren (cold isostatic pressing, CIP),
c. Verschließen des genannten Preßlings in einem Al-Behälter und Entgasen desselben,
d. Weiterverarbeiten des Preßlings in einem erwärmten Gesenk, um einen Block mit einem Füllfaktor (Verhält nis der tatsächlichen Dichte zur theoretischen Dichte) von 100 % herzustellen,
e. Extrusion des genannten Blocks und spanendes Bearbeiten auf eine gewünschte Form,
f. Schmieden des Blockes zu einem Vorformling mit der Gestalt eines Einlaß- oder Auslaßventils,
g. Weiterverarbeiten des genannten Vorformlings durch ein HIP-Verfahren (isostatisches Heißpressen) zur Durchführung einer grenzflächenreaktiven Sinterung,
h. maschinelles Bearbeiten des genannten Vorformlings zum Herstellen eines Grundkörpers, der Ventilform besitzt,
i. Ausbilden einer konkaven Fläche in einer konischen Fläche des genannten Grundkörpers,
j. Flammbeschichten der konkaven Fläche mit Ni-Legierung,
k. maschinelles Bearbeiten des entstandenen Überschusses zu einer glatten Oberfläche, um eine Deckschicht aus Ni-Legierung zu bilden,
l. Befestigen einer Stahlkappe auf dem Schaftende,
m. Beschichten der Oberfläche des genannten Schaftes mit TiN durch Ionenplattieren.

2. Verfahren zur Herstellung eines Einlaß- oder Auslaßventils für einen Verbrennungsmotor nach Anspruch 1, wobei der genannte Preßling einen Füllfaktor (tatsächliche Dichte / theoretischer Dichte) von 75 - 85 % aufweist.

3. Verfahren zur Herstellung eines Einlaß- oder Auslaßventils für einen Verbrennungsmotor nach Anspruch 1 oder 2, wobei das Entgasen bei einer Temperatur von 350 bis 450°C für eine Zeitspanne von 20 - 30 h durchgeführt wird.

4. Verfahren zur Herstellung eines Einlaß- oder Auslaßventils für einen Verbrennungsmotor nach einem der vorhergehenden Ansprüche, wobei das genannte Warmpressen bei einer Temperatur von 350 - 450°C stattfindet.

5. Verfahren zur Herstellung eines Einlaß- oder Auslaßventils für einen Verbrennungsmotor nach einem der vorhergehenden Ansprüche, wobei der HIP-Verfahren (isostatisches Heißpressen) bei einer Temperatur von 1200 - 1400°C, einem Druck von 150 - 170 MPa und einer Haltezeit von 4 bis 6 Stunden durchgeführt wird.

6. Verfahren zur Herstellung eines Einlaß- oder Auslaßventils für einen Verbrennungsmotor nach einem der vorhergehenden Ansprüche, wobei die TiN-Schicht eine Dicke von 1 - 3 µm aufweist.

7. Verfahren zur Herstellung eines Einlaß- oder Auslaßventils für einen Verbrennungsmotor, wobei ein Ti-Barren und ein Al-Barren bzw. ein Ti-Barren und ein Al-Barren und eine AlMn-Vorlegierung miteinander verbunden werden, um eine Zusammensetzung (in Masse-%) von : Al = 30 - 35%, Rest Titan und unvermeidliche Verunreinigungen oder Al = 30 - 35 % oder Mn = 1,5 - 4%, Rest Ti und unvermeidliche Verunreinigungen zu bilden,
- die genannte Zusammensetzung wird geschmolzen und gegossen, um einen Block zu bilden,
- Extrusion des genannten Blockes und dessen maschinelle Bearbeitung, um einen TiAl-Ventilgrundkörper zu bilden,
- Ausbilden einer konkaven Fläche in der konischen Fläche des genannten Grundkörpers,
- Flammbeschichten der konkaven Fläche mit Ni-Legierung,
- maschinelles Bearbeiten des entstandenen Überschusses zu einer glatten Oberfläche,
- Befestigung der Stahlkappe auf dem Schaftende des Ventils,
- Beschichten der Oberfläche des genannten Schaftes mit TiN durch Ionenplattieren.

8. Verfahren zur Herstellung eines Einlaß- oder Auslaßventils für einen Verbrennungsmotor nach Anspruch 7, wobei die Extrusion bei einer Temperatur zwischen 1100 - 1300°C stattfindet.

9. Verfahren zur Herstellung eines Einlaß- oder Auslaßventils für einen Verbrennungsmotor nach einem der vorhergehenden Ansprüche, wobei die Stahlkappe durch Löten verbunden wird.

10. Verfahren zur Herstellung eines Einlaß- oder Auslaßventils für einen Verbrennungsmotor nach Anspruch 9, wobei das Löten bei einer Temperatur von 850 - 950°C unter Vakuum für 5 - 15 Min. durchgeführt wird.

11. Verfahren zur Herstellung eines Einlaß- oder Auslaßventils für einen Verbrennungsmotor nach Anspruch 9 oder 10, wobei ein Lot verwendet wird, das aus einer Ti-Zr-Cu-Ni-Legierung besteht.

## Revendications

1. Procédé de production d'une soupape d'admission ou d'échappement d'un moteur à combustion interne comprenant:
a. le mélange d'une poudre de Ti de granulométrie inférieure ou égale à 150 µm avec une poudre de Al ou de AlMn et/ou une poudre de AlCr de granulométrie inférieure ou égale à 150 µm en vue d'obtenir une composition à base de (en terme de % en masse): Al = 32-35%, le reste étant constitué de Ti et d'impuretés inséparables ou de Al = 32-35% et Mn et/ou de Cr = 2-3%,
b. le façonnage dudit mélange en un corps pulvérulent comprimé par un procédé CIP (compression isostatique à froid),
c. le remplissage dudit corps pulvérulent comprimé dans un récipient en Al hermétique et le dégazage du récipient,
d. le travail du corps à l'aide d'une presse à chaud en vue de préparer une billette présentant un taux de compression de 100% (rapport de la masse volumique réelle sur la masse volumique théorique),
e. l'extrusion de ladite billette et le découpage de celle-ci suivant une forme conçue à l'avance,
f. la forgeage du produit pour obtenir une préforme ayant la forme d'une soupape d'admission ou d'échappement,
g. le travail de ladite préforme par un procédé HIP (compression isostatique à chaud) en vue de réaliser un frittage par réaction,
h. l'usinage de ladite préforme pour obtenir un corps de base ayant la forme d'une soupape,
i. la formation d'une surface concave sur la face conique dudit corps de base,
j le revêtement de la surface concave à la flamme avec un alliage en Ni,
k. l'enlèvement par usinage du dépôt en excès pour obtenir une surface douce en vue de former une couche de revêtement en alliage Ni,
l. la fixation d'un bouchon en acier sur l'extrémité de la tige,
m. le revêtement de la surface de ladite tige de TiN au moyen de plaquage ionique.

2. Procédé de production d'une soupape d'admission ou d'échappement d'un moteur à combustion interne selon la revendication 1, dans lequel ledit corps pulvérulent comprimé présente un taux de compression (masse volumique réelle/masse volumique théorique) de 75 à 85%.

3. Procédé de production d'une soupape d'admission ou d'échappement d'un moteur à combustion interne selon la revendication 1 ou 2, dans lequel ledit dégazage s'effectue à une température de 350 à 450°C pendant 20 à 30 heures.

4. Procédé de production d'une soupape d'admission ou d'échappement d'un moteur à combustion interne selon l'une quelconque des revendications précédentes, dans lequel ladite compression à chaud se déroule à une température de 350 à 450°C.

5. Procédé de production d'une soupape d'admission ou d'échappement d'un moteur à combustion interne selon l'une quelconque des revendications précédentes, dans lequel le procédé HIP (compression isostatique à chaud) s'effectue à une température comprise entre 1200 et 1400°C, une pression de 150 à 170 MPa et comporte un temps de séjour de 4 à 6 heures.

6. Procédé de production d'une soupape d'admission ou d'échappement d'un moteur à combustion interne selon l'une quelconque des revendications précédentes, dans lequel la couche de Ti-N présente une épaisseur de 1 à 3 µm

7. Procédé de production d'une soupape d'un moteur à combustion interne, dans lequel un lingot en Ti et un lingot en Al ou un lingot en Ti et un lingot en Al et un alliage intermédiaire en AlMn sont mélangés, respectivement, en vue d'obtenir une composition à base de (en terme de % en masse): Al = 30-35%, le reste étant constitué de Ti et d'impuretés inséparables ou à base d'Al = 30,35 ou de Mn = 1,5-4%, le reste étant constitué de Ti et d'impuretés inséparables, procédé comprenant de manière successive,
- la fusion et le moulage de ladite composition en vue d'obtenir une billette,
- l'extrusion de ladite billette et l'usinage de celle-ci en vue de former un corps de base d'une soupape en TiAl,
- la formation d'une surface concave sur la face conique dudit corps de base,
- le revêtement à la flamme de la surface concave avec un alliage en Ni,
- l'enlèvement par usinage du dépôt en excès pour obtenir une surface douce,
- la fixation d'un bouchon en acier sur l'extrémité de la tige de la soupape,
- le revêtement de la surface de ladite tige avec TiN par plaquage ionique.

8. Procédé de production d'une soupape d'admission ou d'échappement d'un moteur à combustion interne selon la revendication 7, dans lequel l'extrusion a lieu à une température comprise entre 1100 et 1300°C.

9. Procédé de production d'une soupape d'admission ou d'échappement d'un moteur de combustion interne selon l'une quelconque des revendications précédentes, dans lequel la fixation du bouchon en acier se fait par soudage.

10. Procédé de production d'une soupape d'admission ou d'échappement d'un moteur à combustion interne selon la revendication 9, dans lequel le soudage s'effectue sous vide à une température de 850 à 950°C pendant 5 à 15 minutes.

11. Procédé de production d'une soupape d'admission ou d'échappement d'un moteur à combustion interne selon la revendication 9 ou 10, dans lequel la matière de soudure utilisée est constituée d'un alliage en Ti-Zr-Cu-Ni.
